# EUROPÄISCHE PATENTANMELDUNG

(11) **EP 2 172 258 A1**
(43) Veröffentlichungstag der Anmeldung: **07.04.2010**
(21) Anmeldenummer: 09170164.9
(22) Anmeldetag: 14.09.2009
(51) Int. Cl.: B01D 69/12, B01D 67/00, B01D 61/36

(54) **Kompositmembran zur Abtrennung von Wasser sowie Verfahren zu deren Herstellung**

(30) Priorität: 02.10.2008 EP 08165680
(71) Anmelder: Sulzer Chemtech GmbH, 35440 Linden (DE)
(72) Erfinder: Hübner, Andreas, Dr., 59425, Unna (DE); Gonzalez Diaz, Elena, Dr., 66440, Blieskastel (DE); Frania, Michael, 66299, Friedrichsthal (DE)
(74) Vertreter: Kluthe, Stefan

(57) **Zusammenfassung**

Es wird eine Kompositmembran zur Abtrennung von Wasser vorgeschlagen mit wenigstens einer Trennschicht (4) aus vorvernetztem Polyvinylalkohol, wobei die Trennschicht (4) in einem separaten Verfahrensschritt einer Nachvernetzung mit einer Säure oder einer Säure abspaltenden Verbindung und mindestens einem Dialdehyd unterworfen wird. Ferner wird ein Verfahren zur Herstellung einer solchen Kompositmembran (1) vorgeschlagen.

## Beschreibung

Die Erfindung betrifft eine Kompositmembran zur Abtrennung von Wasser, deren Verwendung sowie ein Verfahren zur Herstellung einer solchen Kompositmembran gemäss dem Oberbegriff des unabhängigen Anspruchs der jeweiligen Kategorie.

Zur Abtrennung oder Abscheidung von Wasser aus fluiden Gemischen, die organische Komponenten enthalten, ist es bekannt, die Verfahren der Pervaporation oder der Dampfpermeation zu verwenden. Für diese Verfahren sind Membranen bekannt, die wenigstens eine Trennschicht aufweisen. In der EP-A-0 096 339 wird beispielsweise eine Kompositmembran offenbart, die aus einer Trägerschicht, einer porösen Stützschicht und einer Trennschicht aus vernetztem Polyvinylalkohol (PVA) besteht.

Als Trägerschicht dient üblicherweise ein gewebtes Tuch oder Vlies, das eine hohe Beständigkeit gegenüber Chemikalien und Temperatur aufweist. Bevorzugtes Material für die Trägerschicht ist Polyester mit einer einseitig glatten Oberfläche. Auf die Trägerschicht ist eine poröse Stützschicht aufgebracht, welche die Eigenschaften einer Ultrafiltrationsmembran aufweist. Bevorzugt sind poröse Stützschichten aus Polyacrylnitril (PAN) oder Polysulfon (PS).

Die Einstellung der Porengröße und Porenradienverteilung kann durch entsprechende Bedingungen bei der Herstellung der porösen Stützschicht erfolgen.

Die Trennschicht solcher Membranen besteht aus vernetztem Polyvinylalkohol mit hohem Verseifungsgrad und einem mittleren Molekulargewicht zwischen 20000 und 200000 Dalton. Die Vernetzung des Polyvinylalkohols der Trennschicht erfolgt durch Veresterung, Verethern oder Acetalisierung oder durch eine Kombination dieser Verfahren. Nach dem Auftragen einer wässrigen Lösung des Polyvinylalkohols und der Vernetzungsmittel wird die Trennschicht bei einer Temperatur von 120°C bis 160°C getrocknet, ausgehärtet und vernetzt. Der Vorgang des Auftragens der wässrigen Lösung und der anschliessenden Wärmebehandlung kann mehrmals beispielsweise zweimal nacheinander erfolgen. Die Dicke der Trennschicht beträgt typischerweise 0,5µm bis 10µm. Derartige Membranen werden bei Temperaturen zwischen 45°C bis 95°C betrieben.

Um höhere Betriebstemperaturen zu ermöglichen und eine bessere Beständigkeit inbesondere gegen Basen und Säuren zu erzielen, ist es aus der DE-A-10 2004 060 857 bekannt, die Trennschicht aus vernetztem Polyvinylalkohol in einem separaten Verfahrensschritt einer Nachvernetzung zu unterziehen, wobei keine Säuren oder Säure abspaltenden Verbindungen zugesetzt werden. Auch wenn sich diese nachvernetzten Membranen in der Praxis bewährt haben, so unterliegen sie jedoch der Einschränkung, dass die Dauer der Nachvernetzung 6 bis 48 Stunden beträgt, wobei die Dauer von 10 bis 16 Stunden bevorzugt ist. Diese lange Behandlungszeit macht die Herstellung langwierig.

Aus der EP-A-0 436 128 ist eine Membran aus Polyvinylalkohol bekannt, bei welcher die vernetzte (vorvernetzte) Membran durch die Einwirkung von Säuren oder Säure abspaltender Substanzen, die über die Dampfphase auf das PVA einwirken, nachvernetzt wird. Auch hiermit lassen sich höhere Betriebstemperaturen ermöglichen, und die Beständigkeit gegen Säuren und Basen wird erhöht. Problematisch bei dieser Herstellung ist jedoch, dass das Verfahren in der Praxis unter vermindertem Sauerstoffpartialdruck durchgeführt werden sollte, was insbesondere bei grösseren Produktionen auf praktische Probleme stösst.

In der EP 0 307 636 wird ein Verfahren zur Herstellung einer Kompositmembran für Pervaporation und Dampfpermeation mit einer Trennschicht aus Polyvinylalkohol offenbart, wobei der Polyvinylalkohol mit einem Dialdehyd und einer Säure als Katalysator vernetzt wird. Die PVA-Lösung enthält dazu gleichzeitig Dialdehyd und Säure als Katalysator. Solche Lösungen sind in der Regel sehr instabil und reagieren schon bei Raumtemperatur, wodurch die Viskosität der Lösung steigt. Dadurch ist ein kontrolliertes und insbesondere ein maschinelles Auftragen der Lösung in der Praxis kaum realisierbar.

Es hat sich ferner gezeigt, dass bei Verwendung von bekannten Kompositmembranen mit einer Trennschicht aus vernetztem PVA bei der Entwässerung von Gemischen, die Aldehyde enthalten, Probleme auftreten. Bereits nach vergleichsweise kurzer Betriebsdauer ist die Selektivität der Trennschicht für Wasser drastisch gesunken. So ist beispielsweise in einer Mischung Ethanol/Wasser und 1 % Acetaldehyd nach einer Betriebsdauer von 47 Stunden die Selektivität der Membran von anfänglich 99% auf 80% gesunken. Diese Prozentzahlen geben im Wesentlichen den Wassergehalt des Permeats an.

Ausgehend von diesem Stand der Technik ist es daher eine Aufgabe der Erfindung, eine Kompositmembran mit einer Trennschicht aus Polyvinylalkohol vorzuschlagen, die auch bei der Entwässerung von aldehydhaltigen Gemischen eine hohe Selektivität behält und stabil bleibt. Zudem soll die Kompositmembran auch bei höheren Betriebstemperaturen von bis zu 120°C betreibbar sein. Ferner soll durch die Erfindung ein Verfahren zur Herstellung einer solchen Kompositmembran vorgeschlagen werden.

Die diese Aufgabe lösenden Gegenstände der Erfindung sind durch die unabhängigen Ansprüche der jeweiligen Kategorie gekennzeichnet.

Erfindungsgemäss wird also eine Kompositmembran zur Abtrennung von Wasser vorgeschlagen, mit wenigstens einer Trennschicht aus vorvernetztem Polyvinylalkohol, wobei die Trennschicht in einem separaten Verfahrensschritt einer Nachvernetzung mit einer Säure oder einer Säure abspaltenden Verbindung und mindestens einem Dialdehyd unterworfen wird.

Es hat sich in überraschender Weise gezeigt, dass eine vorvernetzte Trennschicht, die in an sich bekannter Weise durch Veresterung, Verethern oder Acetalisierung des Polyvinylakohols oder durch eine Kombination dieser Methoden hergestellt und noch nicht thermisch nachvernetzt ist, durch eine Nachvernetzung mit einem Dialdehyd und einer als Katalysator dienenden Säure bzw. einer Säure abspaltenden Verbindung zu einer Kompositmembran führt, die auch unter erhöhter Betriebstemperatur eine sehr gute Stabilität gegenüber Gemischen, die Aldehyde enthalten, aufweist.

Die als separater Schritt vorgesehene Nachvernetzung erfolgt vorzugsweise mittels einer wässrigen Lösung, die sowohl die Säure bzw. die die Säure abspaltende Verbindung als auch das Dialdehyd enthält. Die Säure-Dialdehyd-Lösung ist dabei sehr stabil, da sie kein Polyvinylalkohol enthält.

Die Nachvernetzung erfolgt vorteilhaft bei einer erhöhten Temperatur, die vorzugsweise im Bereich von 150°C bis 220°C liegt und besonders bevorzugt im Bereich von 160°C bis 200°C.

Die Dauer der Nachvernetzung liegt insbesondere zwischen einer und 30 Minuten, vorzugsweise zwischen 5 und 15 Minuten.

Bevorzugt erfolgt die Nachvernetzung mittels einer Lösung, in welcher das Dialdehyd in Mengen zwischen 1 % und 30%, vorzugsweise zwischen 5% und 10%, enthalten ist.

Insbesondere geeignet als Dialdehyd ist Glutardialdehyd.

Hinsichtlich des Säuregehalts für die Nachvernetztung hat es sich bewährt, wenn die Nachvernetzung mittels einer Lösung erfolgt, in welcher die Säure in Mengen von 0.1 % bis 1 %, vorzugsweise von 0.3% bis 0.6%, enthalten ist.

Eine bevorzugte Säure für die Nachvernetzung ist Schwefelsäure.

Ferner ist es vorteilhaft, wenn die Nachvernetzung mittels einer wässrigen Lösung erfolgt, die Wasser in Mengen von 70% bis 95%, vorzugsweise von 85% bis 95%, enthält.

Die Lösung für die Nachvernetzung kann bis zu 30%, vorzugsweise von 5% bis 15% Alkohol enthält, wobei der Alkohol vorzugsweise Ethanol ist.

In einer besonders bevorzugten Ausführungsform erfolgt die Nachvernetzung mit einer wässrigen Lösung die mindestens einen Alkohol enthält, wobei das Wasser-Alkohohl-Gemisch als Lösungsmittel für das Dialdehyd und die Säure dient.

Eine insbesondere bevorzugte Verwendung der erfindungsgemässen Kompositmembran ist diejenige zur Abtrennung von Wasser aus fluiden Gemischen, die organische Komponenten enthalten, mittels Pervaporation oder Dampfpermeation.

Ferner wird durch die Erfindung ein Verfahren zur Herstellung einer Kompositmebran mit wenigstens einer Trennschicht aus Polyvinylalkohol vorgeschlagen. Das Verfahren umfasst die folgenden Schritte:
- Aufbringen einer Ausgangslösung, die Polyvinylalkohol enthält, auf eine Stützschicht
- Vorvernetzen des Polyvinylalkohols
- Aufbringen einer Lösung zur Nachvernetzung des Polyvinylalkohols, wobei die Lösung eine Säure oder eine Säure abspaltende Verbindung enthält sowie mindestens ein Dialdehyd
- Nachvernetzen der Trennschicht.

Im Hinblick auf die Vernetzung des PVA ist es vorteilhaft, wenn die Ausgangslösung mindestens eine Dicarboxylsäure enthält und insbesondere eine Dicarboxylsäure ohne Doppelbindug und eine Dicarboxylsäure mit Doppelbindung.

Ein bevorzugtes Dialdehyd für die Nachvernetzung ist Glutardialdehyd.

Als Säure enthält die Lösung zur Nachvernetzung vorzugsweise Schwefelsäure.

Weitere vorteilhafte Massnahmen und bevorzugte Ausgestaltungen der Erfindung ergeben sich aus den abhängigen Ansprüchen.

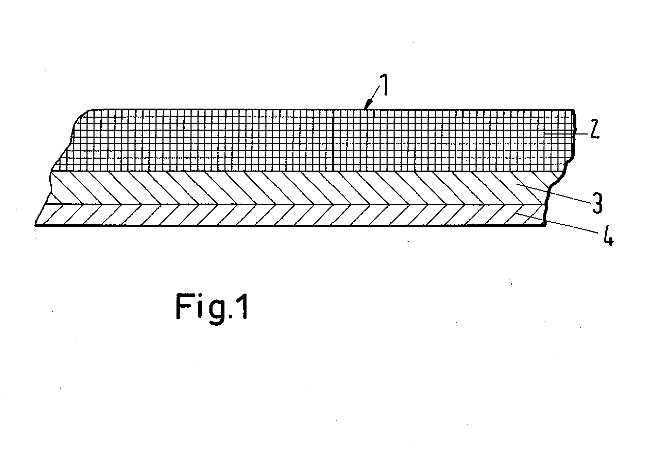

Im Folgenden wird die Erfindung anhand von Ausführungsbeispielen und anhand der Zeichnung näher erläutert. In der Zeichnung zeigt
- Fig. 1: eine schematische Schnittdarstellung eines Ausführungsbeispiels einer erfindungsgemässen Kompositmembran.

Fig. 1 zeigt in einer schematischen Schnittdarstellung ein Ausführungsbeispiel einer erfindungsgemässen Kompositmembran, die gesamthaft mit dem Bezugszeichen 1 bezeichnet ist. Die Kompositmembran 1 hat eine Trägerschicht 2, auf der eine poröse Stützschicht 3 aufgebracht ist. Auf der Stützschicht 3 ist eine Trennschicht 4 aus Polyvinylalkohol (PVA) vorgesehen.

Die Trägerschicht 2 besteht in an sich bekannter Weise aus einem gewebten Tuch oder einem Vlies oder aus einer porösen Keramik. Als Material für die Trägerschicht 2 können alle Stoffe von ausreichender Beständigkeit gegenüber der zu erwartenden bzw. angestrebten Betriebstemperatur und den Chemikalien, welche in dem zu trennenden Fluid vorhanden sind, eingesetzt werden. Das für die Trägerschicht 2 bevorzugte Material ist Polyester mit einer einseitig glatten Oberfläche. Weitere geeignete Materialien für das Tuch oder das Vlies sind beispielsweise Polyphenylensulfid, Polymid und Polyvinylidendifluorid. Als anorganische Materialien sind Glas- oder Kohlefasern, Metalle oder Keramik bevorzugt.

Auf die Trägerschicht 2 wird in an sich bekannter Weise die poröse Stützschicht 3 mit möglichst einheitlicher Porenweite aufgetragen. Als Materialien für die poröse Stützschicht sind unter den Polymeren Polyacrylnitril (PAN), Polysulfon (PS), Polyethersulfon und Polyetheretherketon bevorzugt. Besteht die Trägerschicht 2 aus Keramik, dann ist die poröse Stützschicht 3 bevorzugt aus Keramik. Die poröse Stützschicht 3 weist die Eigenschaften einer Ultrafiltrationsmembran auf.

Die Trennschicht 4 wird aus vernetztem Polyvinylalkohol gebildet, der bevorzugt aus einer wässrigen Ausgangslösung auf die Oberfläche der Stützschicht 3 aufgebracht wird. Die Ausgangslösunglösung enthält Vernetzungsmittel, die den Polyvinylalkohol durch Verethern, Veresthern oder Acetalisierung oder eine Kombination dieser drei Vorgänge vernetzen und auch in siedendem Wasser unlöslich machen. Zur Beschleunigung der Vernetzung kann Säure zugesetzt werden. Als Vernetzungsmittel eignen sich insbesondere Formaldehyd und Dicarboxylsäuren (Doppelsäuren). Besonders vorteilhaft ist es, wenn die Ausgangslösung eine Dicarboxylsäure ohne Doppelbindung, z.B. Malonsäure, sowie eine Dicarboxylgruppe mit Doppelbindung, z. B. Maleinsäure, enthält.

Die Trennschicht 4 kann in einem oder in mehreren Arbeitsschritten aufgetragen werden. Nach jedem Auftrag wird die Trennschicht 4 getrocknet und vernetzt, was vorteilhafterweise bei Temperaturen zwischen 80°C und 190°C über einen Zeitraum von 3 Minuten bis zu einer Stunde erfolgt. Besonders vorteilhaft haben sich Temperaturen von 150°C bis 160°C erwiesen bei einer Dauer von sechs Minuten.

Die auf diese Weise präparierte Trennschicht 4 wird als "Trennschicht aus vorvernetztem Polyvinylalkohol" bezeichnet. Erfindungsgemäss erfolgt nun noch eine Nachvernetzung in einem separaten Verfahrensschritt mit einer Säure oder einer Säure abspaltenden Verbindung und mindestens einem Dialdehyd.

In einer bevorzugten Ausführungsform werden zur Nachvernetzung die Säure/Säure abspaltende Verbindung und das Dialdehyd in einer wässrigen Lösung auf die Trennschicht 4 aus vorvernetztem Polyvinylalkohol aufgebracht. Bei der Nachvernetzung dient die Säure als Katalysator. Diese Lösung zur Nachvernetzung, welche die Säure/Säure abspaltende Verbindung sowie das Dialdehyd enthält, ist dabei sehr stabil, weil sie kein PVA enthält. Die Nachvernetzung erfolgt bei einer erhöhten Temperatur von 120°C bis 220°C, vorzugsweise bei mindestens 150°C und besonders bevorzugt bei einer Temperatur im Bereich von 160°C bis 200°C. Die Dauer der Nachvernetzung beträgt zwischen einer Minute und 30 Minuten.

Es hat sich gezeigt, dass auf diese Weise nachvernetzte Trennschichten 4 aus PVA ihre hohe Selektivität behalten und stabil bleiben. Dies gilt insbesondere auch dann, wenn das fluide Gemisch, mit welchem die Kompositmembran 1 zwecks Abscheidung von Wasser beaufschlagt wird, Aldehyde enthält, insbesondere Acetaldehyd.

Als Dialdehyd für die Nachvernetzung eignen sich grundsätzliche alle Substanzen, die zwei funktionelle Gruppen aufweisen, die jeweils mit einer OH-Gruppe reagieren können. Bevorzugt wird als Dialdehyd Glutardialdehyd verwendet. Ebenfalls geeignet ist Malondialdehyd oder andere wasserlösliche Dialdehyde. Die Menge an Dialdehyd in der wässrigen Lösung zur Nachvernetzubg beträgt vorzugsweise 1 % bis 30%.

Als Lösungsmittel für das Dialdehyd oder die Dialdehyde sowie die Säure(n)/Säure abspaltende(n) Verbindung(en) wird vorzugsweise ein Gemisch aus Wasser (100%-70%) und Alkoholen wie Ethanol, Isopropanol, Butanol, Ethylenglycol und Glycerin verwendet.

Als Säuren für die Nachvernetzung eignen sich insbesondere: Schwefelsäure, Salzsäure, Wasserstoffbromsäure, Phosphorsäure, wobei die bevorzugte Säure Schwefelsäure ist

Die Beispiele erläutern die Erfindung

### Beispiel 1

Eine als PAN-Ultrafiltrationsmembran ausgebildete Stützschicht 3, die auf der Trägerschicht 2 vorgesehen ist, wurde mit einer 5%igen PVA-Lösung gemäss Stand der Technik beschichtet und bei 150°C während einer Dauer von sechs Minuten vorvernetzt. Danach wurde die Trennschicht 4 mit einer Lösung zur Nachvernetzung mit 0,3% Schwefelsäure, 5% Glutardialdehyd und 24,7% Ethanol und 70% Wasser beschichtet und bei 160°C über eine Dauer von zehn Minuten vernetzt. Die Kompositmembran wurde mit einem Gemisch aus 10% Wasser und 90% Ethanol mittels Pervaporation bei 105°C gemessen.

Es wurde ein Fluß von 1,4 kg/m²h gemessen und im Permeat fanden sich 99% Wasser. Danach wurde 1 % Acetaldehyd zu der Wasser/Ethanol-Mischung gegeben und die Membran wurde einem Dauertest bei 105°C unterzogen. Nach 120 Stunden Betriebszeit wurde ein Fluß von 1,7 kg/m²h gemessen und im Permeat fanden sich 95% Wasser.

### Beispiel 2

Eine als PAN-Ultrafiltrationsmembran ausgebildete Stützschicht 3, die auf der Trägerschicht 2 vorgesehen ist, wurde mit einer 3%igen PVA-Lösung gemäss Stand der Technik zweimal beschichtet. Nach der ersten Beschichtung erfolgte eine Vorvernetzung bei 150°C über einen Zeitraum von sechs Minuten. Nach der zweiten Beschichtung erfolgte eine Vorvernetzung bei einer Temperatur von 160°C über einen Zeitraum von sechs Minuten. Danach wurde die vorvernetzte Trennschicht 4 mit einer Nachvernetzungslösung mit 0,5% Schwefelsäure, 10% Glutardialdehyd und 89,5% Wasser beschichtet und bei 180°C fünf Minuten nachvernetzt.

Die Kompositmembran wurde mit einem Gemisch aus 10% Wasser und 90% Ethanol mittels Pervaporation bei 105°C gemessen.

Es wurde ein Fluß von 1,1 kg/m²h gemessen und im Permeat fanden sich 99,0% Wasser. Danach wurde 1 % Acetaldehyd zu der Wasser/Ethanol-Mischung gegeben und die Membran wurde einem Dauertest bei 105°C unterzogen. Nach 120 Stunden Betriebszeit wurde ein Fluß von 1,4 kg/m²h gemessen und im Permeat fanden sich 97% Wasser.

## Patentansprüche

1. Kompositmembran zur Abtrennung von Wasser mit wenigstens einer Trennschicht (4) aus vorvernetztem Polyvinylalkohol, **dadurch gekennzeichnet, dass** die Trennschicht (4) in einem separaten Verfahrensschritt einer Nachvernetzung mit einer Säure oder einer Säure abspaltenden Verbindung und mindestens einem Dialdehyd unterworfen wird.

2. Kompositmembran nach Anspruch 1, wobei die Nachvernetzung bei einer erhöhten Temperatur erfolgt, die vorzugsweise im Bereich von 150°C bis 220°C liegt und besonders bevorzugt im Bereich von 160°C bis 200°C.

3. Kompositmembran nach einem der vorangehenden Ansprüche, wobei die Dauer der Nachvernetzung zwischen einer und 30 Minuten liegt, vorzugsweise zwischen 5 und 15 Minuten.

4. Kompositmembran nach einer der vorangehenden Ansprüche, wobei die Nachvernetzung mittels einer Lösung erfolgt, in welcher das Dialdehyd in Mengen zwischen 1 % und 30%, vorzugsweise zwischen 5% und 10%, enthalten ist.

5. Kompositmembran nach einem der vorangehenden Ansprüche, bei welcher das Dialdehyd Glutardialdehyd ist.

6. Kompositmembran nach einem der vorangehenden Ansprüche , wobei die Nachvernetzung mittels einer Lösung erfolgt, in welcher die Säure in Mengen von 0.1 % bis 1 %, vorzugsweise von 0.3% bis 0.6%, enthalten ist.

7. Kompositmembran nach einem der vorangehenden Ansprüche, bei welcher die Säure für die Nachvernetzung Schwefelsäure ist.

8. Kompositmembran nach einem der vorangehenden Ansprüche, wobei die Nachvernetzung mittels einer Lösung erfolgt, die Wasser in Mengen von 70% bis 95%, vorzugsweise von 85% bis 95%, enthält.

9. Kompositmembran nach einem der vorangehenden Ansprüche, wobei die Nachvernetzung mittels einer Lösung erfolgt, die bis zu 30%, vorzugsweise von 5% bis 15% Alkohol enthält, und wobei der Alkohol vorzugsweise Ethanol ist.

10. Verwendung einer Kompositmembran nach einem der vorangehenden Ansprüche zur Abtrennung von Wasser aus fluiden Gemischen, die organische Komponenten enthalten, mittels Pervaporation oder Dampfpermeation

11. Verfahren zur Herstellung einer Kompositmebran mit wenigstens einer Trennschicht (4) aus Polyvinylalkohol umfassend die folgenden Schritte:
- Aufbringen einer Ausgangslösung, die Polyvinylalkohol enthält, auf eine Stützschicht (3)
- Vorvernetzen des Polyvinylalkohols
- Aufbringen einer Lösung zur Nachvernetzung des Polyvinylalkohols, wobei die Lösung eine Säure oder eine Säure abspaltende Verbindung enthält sowie mindestens ein Dialdehyd
- Nachvernetzen der Trennschicht (4).

12. Verfahren nach Anspruch 11, wobei die Ausgangslösung mindestens eine Dicarboxylsäure enthält.

13. Verfahren nach einem der Ansprüche 11 oder 12, wobei die Ausgangslösung eine Dicarboxylsäure ohne Doppelbindug und eine Dicarboxylsäure mit Doppelbindung enthält.

14. Verfahren nach einem der Ansprüche 11 bis 13, wobei das Dialdehyd Glutardialdehyd ist.

15. Verfahren nach einem der Ansprüche 11-14 , wobei die Lösung zur Nachvernetzung Schwefelsäure enthält.
